# EUROPÄISCHE PATENTANMELDUNG

(11) **EP 1 202 485 A1**
(43) Veröffentlichungstag der Anmeldung: **02.05.2002**
(21) Anmeldenummer: 00440280.6
(22) Anmeldetag: 18.10.2000
(51) Int. Cl.: H04J 14/06

(54) **Verfahren zum Übertragen eines optischen Multiplexsignals sowie Sender und Empfänger dafür**

(71) Anmelder: ALCATEL, 75008 Paris (FR)
(72) Erfinder: Weis, Bernd X., 70825 Korntal (DE)
(74) Vertreter: Urlichs, Stefan, Dipl.-Phys.

(57) **Zusammenfassung**

Bei einem Verfahren zum Übertragen eines optischen Multiplexsignals (MS) über eine optische Faser werden ein erstes optischen Teilsignal (S1) und ein zweites optisches Teilsignal (S2) derselben Wellenlänge zeitlagengemultiplext. Dabei weisen das erste und der zweite Teilsignal (S1, S2) zueinander senkrechte Polarisationsrichtungen auf, so daß eine räumliche Trennung der beiden Signalanteile (S1, S2) mit Hilfe eines Polarisationsfilters (PF) ermöglicht wird.

## Beschreibung

Die Erfindung betrifft ein Verfahren zum Übertragen eines optischen Multiplexsignals, das aus zwei zeitlagengemultiplexten Teilsignalen besteht. Desweiteren betrifft die Erfindung einen Sender zum Erzeugen eines solchen Multiplexsignals sowie einen Empfänger zum Empfangen eines solchen Multiplexsignals.

In der Nachrichtenübertragung werden zur Erzielung immer höherer Übertragungsraten, Nachrichtensignale optisch über Glasfasern übertragen. So sind derzeit in Europa und den USA die synchronen optischen Systeme SDH (Synchrone Digitale Hierarchie) und SONET (Synchronous Optical Network) verbreitet. Bei diesen bestehen die übertragenen Nachrichtensignale aus einem ersten als Payload bezeichneten Signalanteil, der Nutzdaten enthält, und einem als Overhead bezeichneten zweiten Signalanteil, der Steuerinformationen für die Netzelemente auf dem Übertragungspfad beinhaltet. Payload und Overhead werden zeitlagengemultiplext mit derselben Wellenlänge oder Wellenlängenverteilung übertragen. Bei SDH und SONET arbeiten die auf dem Übertragungspfad eingesetzten Netzelemente wie z.B. Add/Drop-Multiplexer, Leitungsmultiplexer, Crossconnects und Regeneratoren elektrisch, d.h. es findet in jedem Empfänger eine Umwandlung des empfangenen optischen Nachrichtensignals in ein elektrisches Signal und in jedem Sender eine Umwandlung des zu sendenden elektrischen Signals in ein optischen Signal statt. Für zukünftige Übertragungssysteme höherer Übertragungsrate wird diese Umwandlung einen Flaschenhals darstellen, der die maximal erzielbare Übertragungsrate begrenzt. Eine rein optische Signalverarbeitung erscheint hier nicht möglich, da kein Weg bekannt ist, mit rein optischen Mitteln die Nutzdatenanteile von den für Netzelemente bestimmten Steuerinformationen zu trennen, um diese getrennt auszuwerten und zu bearbeiten.

Daneben werden derzeit sogenannte WDM-Systemen (wavelength division multiplexing) entwickelt, bei denen mehrere Nachrichtensignale im Wellenlängenmultiplex, d.h. mit unterschiedlichen Wellenlängen, parallel übertragen werden. In der näheren Zukunft wird die Signalverarbeitung und Signalregenerierung bei solchen WDM-Systeme ebenfalls noch elektrisch erfolgen, doch wird bereits an rein optischen Netzen (sogenannten all-optical networks) geforscht. Um in solchen rein optischen Netzen Nutzdaten von Steuerinformationen, die für die Netzelemente auf dem Übertragungspfad bestimmt sind, trennen zu können, ist für solche Steuerinformationen eine eigene Wellenlänge vorgesehen, der sogenannte Supervisory Channel. Eine Schwierigkeit hierbei liegt darin, das der Supervisory Channel allen Nutzdatenkanälen gemeinsam zugeordnet ist und somit keine effiziente Übertragung von pfadspezifischen Steuerinformationen möglich ist.

Aufgabe der Erfindung ist es daher, ein Verfahren zum Übertragen eines optischen Multiplexsignals anzugeben, bei dem pfadspezifische Steuerinformationen zusammen mit einem Nutzdatensignal übertragen werden können, wobei eine eindeutige Zuordnung zwischen Steuerinformationen und Nutzdaten besteht und diese beiden Signalanteile mit rein optischen Mitteln trennbar sind. Weitere Aufgaben der Erfindung bestehen darin, einen Sender anzugeben, der ein solches Multiplexsignal erzeugt sowie einen Sender, der die Signalanteile von Steuerinformationen und Nutzdaten mit rein optischen Mitteln trennt.

Die Aufgabe wird hinsichtlich des Verfahrens gelöst durch die Merkmale des Anspruchs 1, hinsichtlich des Senders durch die Merkmale des Anspruchs 5 und hinsichtlich des Empfängers durch die Merkmale des Anspruchs 9. Vorteilhafte Ausgestaltungen sind den abhängigen Ansprüchen zu entnehmen.

Die Erfindung gestattet den Aufbau eines rein optischen Nachrichtenübertragungsnetzes, d.h. eines Systems, bei dem Signalbearbeitung und Regeneration mit rein optischen Mitteln durchgeführt werden können. Besonders vorteilhaft kann die Erfindung auch bei WDM-Systemen eingesetzt werden, d.h. es können mehrere Nachrichtensignale mit jeweils zugeordneten Steuerinformationen im Wellenlängenmultiplex übertragen werden. Dabei ermöglicht die Erfindung eine sogenannte "in-band" Signalisierung, d.h. die Steuerinformationen werden auf derselben Wellenlänge wie die Nutzdaten übertragen. Bei den Steuerinformationen kann es sich um einen Pfadoverhead oder um ein passives optisches Rahmensignal handeln.

Im folgenden wird die Erfindung in mehreren Ausführungsbeispielen anhand der Figuren 1 bis 4 erläutert. Es zeigt:
- Figur 1:: Das Prinzip der rein optischen Trennung der Signalanteile;
- Figur 2:: Einen Sender zur Erzeugung des optischen Multiplexsignals;
- Figur 3:: Einen ersten Empfänger für das optische Multiplexsignal, der ein Teilsignal extrahiert und verstärkt wieder einfügt;
- Figur 4:: Einen zweiten Empfänger für das optische Multiplexsignal, der ein Teilsignal extrahiert und dafür ein neues Teilsignal einfügt.

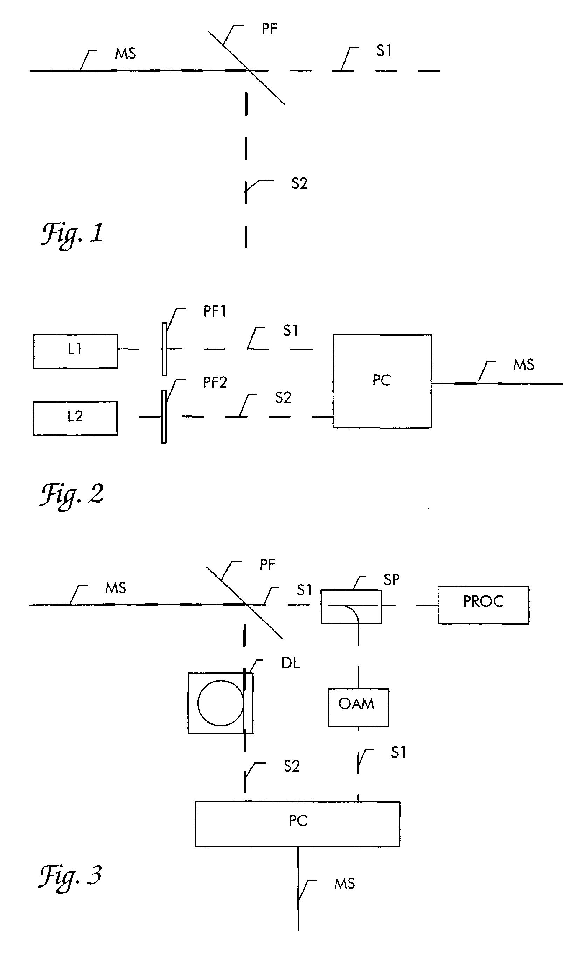

In Figur 1 ist das der Erfindung zugrundeliegende Prinzip der rein optischen Trennung von Teilsignalen S1, S2 eines Multiplexsignals MS einer einzigen Wellenlänge dargestellt. Das Multiplexsignal MS wird auf einen Polarisationsfilter PF gegeben, der die Teilsignale S1 und S2 räumlich trennt. Dazu besteht ein Grundgedanke der Erfindung darin, für die Teilsignale S1 und S2 zueinander senkrechte Polarisationsrichtungen zu verwenden. Der Polarisationsfilter PF transmittiert Lichtanteile mit der Polarisationsrichtung des ersten Teilsignals S1 und reflektiert Lichtanteile mit der Polarisationsrichtung des zweiten Teilsignals S2. Dadurch wird mit rein optischen Mitteln die räumliche Trennung erreicht.

Werden nun Teilsignale mit zueinander senkrechter Polarisationsrichtung gleichzeitig über eine optische Faser übertragen, so kann es durch Polarisationsmodendispersion zu Übersprechen zwischen den Teilsignalen kommen. Um dies zu verhindern besteht ein zweiter Grundgedanke der Erfindung darin, die beiden Teilsignale zeitversetzt also im Zeitlagenmultiplex zu übertragen. In Figur 1 ist die dadurch angedeutet, daß das Multiplexsignal in Zeitschlitze unterteilt ist. Erste Zeitschlitze sind normal durchgezogen gezeichnet, zweite Zeitschlitze sind fett gezeichnet. Das erste Teilsignal erscheint in den ersten Zeitschlitzen und das zweite Teilsignal erscheint in den zweiten Zeitschlitzen.

In Figur 2 zwei ist ein Sender dargestellt, der ein solches Multiplexsignal MS erzeugt. Er enthält einen ersten Laser L1 zum Erzeugen des ersten Teilsignals S1 und einen zweiten Sender L2 zum Erzeugen des zweiten Teilsignals S2. Hinter dem ersten und zweiten Laser L1, L2 ist jeweils ein Polarisationsfilter PF1, PF2 angeordnet, und zwar so, daß der erste Polarisationsfilter PF1 nur Licht der ersten Polarisationsrichtung durchläßt und der zweite Polarisationsfilter nur Licht der zweiten, zur ersten senkrechten Polarisationsrichtung durchläßt. Die beiden so erzeugten Teilsignale S1, S2 werden einem passiven optischen Combiner zugeleitet, der diese zum optischen Multiplexsignal MS kombiniert. Die elektrische Ansteuerung und Synchronisation der beiden Laser L1, L2 ist in der Figur 2 nicht gezeigt und dem Fachmann an sich geläufig.

Ein erstes Ausführungsbeispiel eines Empfängers für ein solches Multiplexsignal ist in Figur 3 dargestellt. Er enthält den in Figur 1 dargestellten Polarisationsfilter PF, der die beiden Teilsignale S1, S2 räumlich trennt. In Durchlaßrichtung ist dem Polarisationsfilter PF ein passiver Splitter nachgeschaltet, der das erste Teilsignal in zwei Strahlen aufteilt. Ein Strahl wird einer Verarbeitungseinheit PROC zugeführt, während der zweite Strahl in einem optischen Verstärker OAM, beispielsweise einem Faserverstärker verstärkt und einem passiven optischen Combiner PC zugeführt wird. Das zweite Teilsignal wird über eine optische Verzögerungseinheit, beispielsweise eine an sich bekannte Delay-Line, ebenfalls dem passiven Combiner PC zugeführt. Der Combiner PC kombiniert die beiden Teilsignale wieder zu einem Multiplexsignal, welches dann weitergesendet wird.

Bei dem ersten Teilsignal handelt es sich um einen Pfadoverhead, der für die Netzelemente auf dem Übertragungspfad bestimmt ist. Dementsprechend dient die Verarbeitungseinheit PROC dazu, daß erste Teilsignal S1 auszuwerten und zu überwachen. Die Verarbeitungseinheit kann von an sich bekannter Art sein und soll an dieser Stelle nicht näher beschrieben werden da der Schwerpunkt der Erfindung auf die rein optische Trennung der Teilsignale abzielt. Die Delay-Line DL gleicht Laufzeitunterschiede in den Signalpfaden von erstem und zweitem Teilsignal aus, damit die Teilsignale wieder zeitlagenversetzt auftreten. Bei dem zweiten Teilsignal handelt es sich um Nutzdaten, die von dem Netzelement, in dem der Empfänger eingesetzt wird, unverändert weitergeleitet werden sollen.

Der erste Empfänger dient dazu, aus dem Multiplexsignal MS den Pfadoverhead auszulesen und phasenrichtig wieder einzufügen. Der ausgelesene Pfadoverhead enthält Steuerinformationen für das Netzelement in dem der Empfänger eingesetzt wird und muß daher von diesem ausgewertet werden. Gleichzeitig wird der unveränderte Pfadoverhead auch wieder in das Multiplexsignal eingefügt, um ihn zusammen mit der Payload weiterzusenden. Ein solcher Empfänger kann z.B. in sogenannten 3R-Regeneratoren eingesetzt werden.

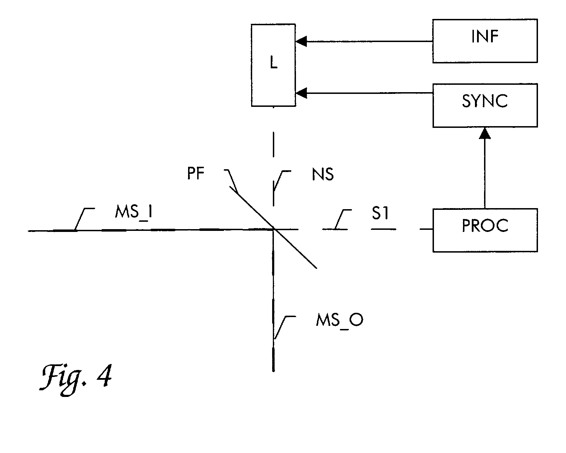

Ein zweites Ausführungsbeispiel für einen erfindungsgemäßen Empfänger ist in Figur 4 dargestellt. Er enthält ebenfalls den aus Figur 1 bekannten Polarisationsfilter, der das empfangene Multiplexsignal MS_I entsprechend der Polarisationsrichtung in erstes und zweites Teilsignal teilt. Das erste Teilsignal S1 wird von dem Polarisationsfilter transmittiert und gelangt zu einer Verarbeitungseinrichtung PROC. Die Verarbeitungseinrichtung steuert eine Synchronisationsschaltung SYNC, die ein Taktsignal erzeugt, das den Beginn jedes Zeitschlitzes des ersten Teilsignals S1 markiert. Ein Laser L erzeugt ein neues Teilsignal NS. Der Laser L wird von der Steuerschaltung INF mit zu sendenden Informationen versorgt. Die Synchronisationsschaltung SYNC steuert den Laser L so, daß er die zu sendenden Informationen in den Zeitschlitzen des ersten Teilsignals sendet. Das so erzeugte neue Teilsignal NS wird auf die Rückseite des Polarisationsfilters PF geleitet, der wiederum Licht mit der Polarisationsrichtung des ersten Teilsignals S1 transmittiert. Dadurch wird das neue Teilsignal NS, phasenrichtig in die Zeitschlitze des ersten Teilsignals S1 in das Multiplexsignal eingefügt, um ein zu sendendes Multiplexsignal MS_O zu bilden. Dieses enthält ja bereits das erste Teilsignal S1, da dieses von dem Polarisationsfilter PF reflektiert wurde.

Das erste Teilsignal stellt wiederum ein Pfadoverhead dar, der von dem empfangenen Multiplexsignal MS_I mit rein optischen Mitteln, nämlich durch den Polarisationsfilter PF getrennt wird. Der Pfadoverhead kann somit in dem Netzelement, in dem der zweite Empfänger eingesetzt wird, verarbeitet werden. Gleichzeitig wird phasengleich mit dem ersten Teilsignal S1 ein neues Teilsignal NS erzeugt, welches einen neuen, zu sendenden Pfadoverhead darstellt. Der Polarisationsfilter PF dient dabei gleichzeitig dazu, das erste Teilsignal von dem zweiten, reflektierten Teilsignal zu trennen, das neue Teilsignal NS räumlich zu polarisieren und es mit dem zweiten Teilsignal wieder zu kombinieren. Ein solcher Empfänger kann in optischen Add/Drop-Multiplexern oder in optischen Crossconnects eingesetzt werden.

Anstelle des in den vorstehend beschriebenen Ausführungsbeispielen eingesetzten Polarisationsfilters, kann auch ein doppeltbrechendes Element eingesetzt werden, dessen doppeltbrechende Eigenschaften dann zum räumlichen Trennen von Lichtanteilen unterschiedlicher Polarisationsrichtung dienen. Es kommt lediglich darauf an, daß ein polarisationsabhängiges Element verwendet wird, d.h. ein Element, welches orthogonale Polarisationsrichtung unterschiedlich ablenkt. Es kann z.B. auch ein passiver Strahlteiler verwendet werden, wobei in jedem Teilstrahl ein Polarisationsfilter eingesetzt wird, der eine zum jeweils anderen Teilstrahl orthogonale Polarisationsrichtung durchläßt. Diese Lösung entspricht einer Umkehr des Lichtweges im vorstehend beschriebenen Sender.

Bei der Übertragung des Multiplexsignals ist darauf zu achten, daß die Polarisationsrichtungen der beiden Signalanteile möglicht gut erhalten bleiben. Deshalb kann als Übertragungsmedium vorteilhaft eine polarisationserhaltende Faser eingesetzt werden. Werden gewöhnliche Fasern eingesetzt, so kann es bei der Übertragung zu einer Drehung der Polarisationsrichtungen kommen. Diese kann dann durch Nachjustieren des Polarisationsfilters im Empfänger kompensiert werden. Das Nachjustieren kann vorab erfolgen, da die Übertragungseigenschaften einer Faser wenig mit der Zeit schwanken. Es kann natürlich auch eine dynamische Kompensation erfolgen, indem auf maximale Empfangsleistung im Empfänger geregelt wird. Alternativ zum Nachjustieren des Polarisationsfilters können auch weitere optische Elemente eingesetzt werden, die eine Kompensation der Drehung der Polarisationsrichtungen bewirken.

Für die Erfindung ist es von Vorteil, die beiden Teilsignale linear zu polarisieren, wobei die Polarisationsrichtungen beider Teilsignale senkrecht zueinander stehen. Dies führt zu einem besonders einfachen Aufbau von Sender und Empfänger. Es kann aber auch zirkular oder elliptisch polarisiertes Licht mit entsprechend entgegengesetzten Polarisationsrichtungen (links/rechts) verwendet werden.

Durch Polarisationsmodendispersion auf dem Übertragungspfad kann es je nach eingesetztem Übertragungsmedium auch zu Laufzeitunterschieden der unterschiedlich polarisierten Teilsignale kommen. Diese können im Empfänger durch geeignete Verzögerungselemente wieder ausgeglichen werden. Auch diese Kompensation kann entweder statisch vorab erfolgen oder dynamisch, indem die Takte der Zeitschlitze verglichen werden um daraus ein Korrektursignal für den dynamischen Abgleich des schnelleren Teilsignals zu bestimmen.

Weitere Abwandlungen der Erfindung können auch im Sender erfolgen, indem anstelle von zwei getrennten Lasern ein einziger eingesetzt wird, der ein zeitlagengemultiplextes optisches Signal aus erstem und zweitem Teilsignal erzeugt und dem ein Polarisationsfilter mit umschaltbarer Durchlaßrichtung nachgeschaltet wird. Dieser umschaltbare Polarisationsfilter wird dann mit dem Taktsignal der Zeitschlitze angesteuert, so daß sich seine Polarisationsrichtung mit jedem neuen Zeitschlitz ändert. Ein solcher Polarisationsfilter kann z.B. eine polarisierende Kunststoffolie sein, deren Polarisationsrichtung durch Anlegen einer externen Spannung umschaltbar ist.

In den Ausführungsbeispielen hatte das Multiplexsignal eine einzige Wellenlänge. Dies ist vorteilhaft, wenn in WDM-Systemen mehrere solcher Multiplexsignale im Wellenlängenmultiplex übertragen werden. Es kann jedoch auch nur ein einziges solches Multiplexsignal übertragen werden, daß dann natürlich nicht auf eine einzige Wellenlänge beschränkt sein braucht, sondern eine breitere Wellenlängenverteilung aufweisen darf.

Es ist weiterhin auch nicht unbedingt notwendig, das erste und zweite Teilsignal im Zeitlagenmultiplex zu erzeugen. Vielmehr können auch andere Multiplexverfahren angewendet werden, die ein Übersprechen zwischen den beiden Teilsignalen unterdrücken, z.B. Code-Multiplex wie optisches CDMA (code division multiple access). Ist die Dispersion auf dem Übertragungspfad zu vernachlässigen, so kann sogar ganz auf ein Multiplexen von erstem und zweitem Teilsignal verzichtet werden, die dann gleichzeitig mit zueinander orthogonalen Polarisationsrichtungen gesendet werden.

## Patentansprüche

1. Verfahren zum Übertragen eines ersten optischen Teilsignals (S1) und eines zweiten optischen Teilsignals (S2) derselben Wellenlänge über eine optische Faser, wobei das erste und das zweite Teilsignal (S1, S2) zu einem Multiplexsignal (MS) zeitlagengemultiplext werden, und das Multiplexsignal über die optische Faser übertragen wird,
**dadurch gekennzeichnet,daß**
das erste und der zweite Signal (S1, S2) zueinander senkrechte Polarisationsrichtungen aufweisen.

2. Verfahren nach Anspruch 1, bei dem das zweite Teilsignal (S2) ein Nutzdatensignal ist und das erste Teilsignal (S1) ein Signalisierungssignal, ein passives Rahmensignal oder ein Pfadoverheadsignal ist.

3. Verfahren nach Anspruch 1, bei dem eine polarisationserhaltende Faser eingesetzt wird.

4. Verfahren nach Anspruch 1, bei dem im Wellenlängenmultiplex weitere Signale auf unterschiedlichen Wellenlängen übertragen werden.

5. Sender zum Erzeugen eines optischen Multiplexsignals (MS), das ein erstes optisches Teilsignal (S1) und ein zweites optisches Teilsignal (S2) derselben Wellenlänge enthält, mit
- einer ersten Lichtquelle (L1) zum Erzeugen des ersten Teilsignals (S1) mit einer ersten Polarisationsrichtung in ersten Zeitschlitzen,
- einer zweiten Lichtquelle (L2) zum Erzeugen des zweiten Teilsignals (S2) mit einer zweiten zur ersten senkrechten Polarisationsrichtung in zweiten Zeitschlitzen, die in zeitlichen Lücken zwischen den ersten Zeitschlitzen auftreten, und
- einem Koppler (PC) zum Zusammenfügen des ersten und zweiten Teilsignals (S1, S2) zu dem Multiplexsignal (MS).

6. Sender nach Anspruch 5, bei dem das zweite Teilsignal (S2) ein Nutzdatensignal ist und das erste Teilsignal (S1) ein Signalisierungssignal, ein passives Rahmensignal oder ein Pfadoverheadsignal ist.

7. Sender nach Anspruch 5, bei dem die beiden Lichtquellen (L1, L2) Laser mit jeweils einem Polarisationsfilter (PF1, PF2) sind, wobei die beiden Polarisationsfilter (PF1, PF2) so angeordnet sind, daß sie Licht mit zueinander senkrechten Polarisationsrichtungen durchlassen.

8. Sender zum Erzeugen eines optischen Multiplexsignals (MS), das ein erstes optisches Teilsignal (S1) und ein zweites optisches Teilsignal (S2) derselben Wellenlänge enthält, mit einem Sendemittel (L1, L2) zum Erzeugen des optischen Multiplexsignals, aus zwei optischen Teilsignalen derselben Wellenlänge, wobei die beiden Teilsignale zeitlagengemultiplext sind und zueinander senkrechte Polarisationsrichtung aufweisen.

9. Empfänger zum Empfangen eines optischen Multiplexsignals (MS), welches zwei optische Teilsignale (S1, S2) derselben Wellenlänge enthält, die zeitlagengemultiplext sind und zueinander senkrechte Polarisationsrichtung aufweisen, mit einem im Signalpfad angeordneten polarisationsabhängigen Element (PF) zum räumlichen Trennen des ersten und zweiten Teilsignals (S1, S2).

10. Empfänger nach Anspruch 9, bei dem das polarisationsabhängige Element (PF) ein doppeltbrechendes Element ist.

11. Empfänger nach Anspruch 9, bei dem das polarisationsabhängige Element (PF) ein Polarisationsfilter ist, der Lichtanteile (S1) einer ersten Polarisationsrichtung transmittiert und Lichtanteile (S2) einer zweiten, zur ersten senkrechten Polarisationsrichtung reflektiert.

12. Empfänger nach Anspruch 9 mit separaten elektrischen oder rein optischen Verarbeitungseinrichtungen (PROC) für die beiden Teilsignale (S1, S2).
